# EUROPÄISCHE PATENTSCHRIFT

(11) **EP 4 117 393 B1**
(45) Veröffentlichungstag und Bekanntmachung des Hinweises auf die Patenterteilung: **30.10.2024**
(21) Anmeldenummer: 22183195.1
(22) Anmeldetag: 05.07.2022
(51) Int. Cl.: H05B 6/60, H05B 6/62, H05B 3/60, A23B 4/01, A23L 3/01

(54) **VORRICHTUNG UND VERFAHREN ZUR KONTINUIERLICHEN OHM´SCHEN ERWÄRMUNG VON LEBENSMITTELN**
METHOD AND DEVICE FOR CONTINUOUS OHMIC HEATING OF FOOD
DISPOSITIF ET PROCÉDÉ DE CHAUFFAGE OHMIQUE CONTINU DES DENRÉES ALIMENTAIRES

(30) Priorität: 07.07.2021 DE 102021207153
(43) Veröffentlichungstag der Anmeldung: 11.01.2023
(73) Patentinhaber: Deutsches Institut für Lebensmitteltechnik e.V., 49610 Quakenbrück (DE)
(72) Erfinder: Stute, Martin, 49610 Quakenbrück (DE); Heinz, Volker, 49610 Quakenbrück (DE)
(74) Vertreter: Taruttis, Stefan Georg

(56) Entgegenhaltungen:
- EP-A1- 1 487 240
- EP-B1- 2 741 616
- EP-B1- 3 280 266
- EP-B1- 3 478 088
- DE-A1- 102010 028 780
- DE-T2- 69 302 461
- US-A1- 2004 224 075

## Beschreibung

Die vorliegende Erfindung betrifft eine Vorrichtung, deren Verwendung und ein damit durchführbares kontinuierliches Verfahren zur Erwärmung von Lebensmitteln durch Stromdurchfluss, das generell auch als Ohm'sches Erwärmen bezeichnet wird. Die Vorrichtung und das Verfahren sind insbesondere an Würste als Lebensmittel angepasst, die durch Einschnüren, z.B. Abdrehen oder Clippen, einer gemeinsamen durchgehenden Hülle aneinanderhängen oder vereinzelt sein können.

Bevorzugte Lebensmittel sind durch ihre Hülle aneinanderhängende Würste, mit fleischhaltigem Brät oder vegetarischer Masse gefüllt, wobei die Hülle elektrisch leitfähig ist, z.B. aus Kollagen, Zellulose, optional mit Fasern, optional aus dielektrischem Material mit Poren, in denen die Füllung freiliegt und nicht von der Hülle überdeckt ist. Die Vorrichtung und das Verfahren zeichnen sich dadurch aus, dass sie eine kontinuierliche und schnelle Erwärmung der Lebensmittel ermöglichen, die bevorzugt über den Querschnitt gleichmäßig ist.

Es ist bekannt, mit Fleischbrät gefüllte Wurstdärme, in denen Würste entlang des Wurstdarms aneinanderhängen, zum Erwärmen auf Gestelle zu hängen und diese in eine mit Dampf und/oder Rauch erwärmte Kammer zu stellen.

Die DE 10 2010 028 780 A1 beschreibt eine Form mit beabstandeten Elektroden und Wänden, die den Abstand der Elektroden überdecken, zur satzweisen Erwärmung von Lebensmitteln zwischen den Elektroden.

Die EP 3 478 088 B1 beschreibt das Einstechen von gruppenweise angeordneten nadelförmigen Elektroden in umhüllte Lebensmittel, um diese durch Einleiten von Strom zu erwärmen.

Die EP 3 280 266 B1 beschreibt das Erwärmen von Wurst, die auf segmentierten rotierenden zylindrischen Elektroden liegt, durch Beaufschlagen mit Strom.

Die EP2 741 616 B1 beschreibt eine Vorrichtung zur Ohm'schen Erwärmung von Lebensmitteln, bei der die Elektroden, die ein Lebensmittel kontaktieren, in Segmente unterteilt sind und die Elektrodensegmente gesteuerte mit Strom beaufschlagt werden, zwischen denen die geringste Leitfähigkeit gemessen wird.

Die US 2004/224075 A1 beschreibt zur Erwärmung von Lebensmitteln einen Durchflusskanal, dessen Seitenwände genau ein Paar einander gegenüberliegender Elektroden aufweist, das mit einer Stromquelle verbunden ist.

Der Erfindung stellt sich die Aufgabe, eine alternative Vorrichtung und ein alternatives Verfahren zum Erwärmen von Würsten bereitzustellen, die eine schnelle Erwärmung von Würsten erlauben und kontinuierlich betrieben werden können, um z.B. gefüllte Wurstdärme unmittelbar nach dem Füllen zu garen.

Die Erfindung löste die Aufgabe mit den Merkmalen der Ansprüche und insbesondere mittels einer Vorrichtung zur kontinuierlichen Erwärmung von Lebensmitteln, insbesondere Würsten, die einen Kanal mit einander gegenüberliegenden Seitenwänden und einem Boden, optional mit oder ohne Deckel, aufweist, wobei sich der Kanal von einem Eintrittsende zu einem entlang der Länge gegenüberliegenden Austrittsende erstreckt, der Kanal zum Aufnehmen elektrisch leitfähiger Flüssigkeit eingerichtet ist und in den Seitenwänden zumindest ein erstes Paar einander gegenüberliegender Elektroden und in einem Abstand entlang des Kanals dazu ein zweites Paar und optional weitere Paare einander gegenüberliegender Elektroden angeordnet, insbesondere eingelassen sind, die jeweils in elektrischem Kontakt zum Kanalinneren stehen, wobei bevorzugt das erste und das zweite Elektrodenpaar und optionale weitere Elektrodenpaare durch jeweils getrennte Sekundärwicklungen eines Transformators mit einer Stromquelle verbunden sind, die von einer gemeinsamen Primärwicklung beaufschlagt sind, oder daraus besteht. Die Vorrichtung kann zusätzlich zu dem ersten und zweiten Elektrodenpaar weitere Elektrodenpaare aufweisen, die bevorzugt jeweils mit getrennten Sekundärwicklungen der einen gemeinsamen Stromquelle verbunden sind, die von einer gemeinsamen Primärwicklung beaufschlagt sind und eingerichtet sind, von dieser erregt zu werden.

Die Stromquelle weist bevorzugt einen mit einem Generator verbundenen Transformator, der bevorzugt ein Hochfrequenztransformator ist, auf, der genau eine oder zumindest eine Primärwicklung, z.B. zumindest zwei Primärwicklungen, und damit gekoppelte Sekundärwicklungen aufweist oder daraus besteht, wobei jeweils eine Sekundärwicklung in elektrischem Kontakt mit den Elektroden eines der Elektrodenpaare steht. Wenn der Transformator zumindest zwei Primärwicklungen aufweist oder daraus besteht, kann jede dieser Primärwicklungen von einem separaten Leistungsschalter gesteuert sein. Bevorzugt weist der Transformator zumindest eine Primärwicklung, z.B. zumindest zwei Primärwicklungen auf, die mit zumindest zwei Sekundärwicklungen gekoppelt sind, so dass die Primärwicklungen, bevorzugt von separaten Leistungsschaltern gesteuert, die Sekundärwicklungen beaufschlagen, bzw. dass die eine oder zumindest zwei Primärwicklungen eine Primärerregung für die damit gekoppelten Sekundärwicklungen bilden. Bei einem Transformator, der zumindest zwei Primärwicklungen aufweist, die eine Primärerregung für die damit gekoppelten Sekundärwicklungen bilden, ist bevorzugt, dass die Primärwicklungen phasengleich von separaten Takterzeugern angesteuert werden.

Der Generator kann z.B. eingerichtet sein, den Transformator mit Wechselspannung, z.B. bis 1000V, z.B. 400 bis 700 V, z.B. 500 bis 600 V, bei einer Frequenz von 1 bis 200 kHz, z.B. 20 bis 50 kHz zu beaufschlagen. Der Transformator kann z.B. eingerichtet sein, die Elektrodenpaare, die voneinander beabstandet entlang der Länge des Kanals von dessen Eintrittsende zum Austrittsende angeordnet sind, mit jeweils höheren oder mit jeweils niedrigeren Spannungen zu beaufschlagen.

Bevorzugt weist die Vorrichtung genau eine Spannungsquelle mit einem Transformator, insbesondere Hochfrequenztransformator, auf, der für jedes Paar von Elektroden eine damit elektrisch verbundene Sekundärwicklung aufweist, wobei die Sekundärwicklungen bevorzugt von genau einer gemeinsamen Primärwicklung beaufschlagt werden.

Die Seitenwände des Kanals sind bevorzugt in einem Abstand gleich dem Durchmesser der Lebensmittel, multipliziert mit einem Faktor von 1,1 bis 1,5, oder in einem Abstand gleich dem Durchmesser der Lebensmittel plus 5 bis 20 mm, z.B. plus 8 bis 15 mm angeordnet, und/oder bevorzugt eben und parallel zueinander, weiter bevorzugt mit ihrer Höhenerstreckung vertikal angeordnet. Dabei ist der Durchmesser der Lebensmittel, die insbesondere Würste sind, senkrecht zur Längserstreckung des Kanals und/oder parallel zum Querschnitt des Kanals bestimmt, z.B. wenn die Lebensmittel in dem Kanal angeordnet sind. Bei gestreckten Lebensmitteln, insbesondere Würsten, ist ihr Durchmesser senkrecht zu ihrer Längserstreckung bestimmt.

Optional weist der Kanal einen Niederhalter auf, der längs des Kanals angebracht ist, z.B. in einem Abstand von dessen Boden, in dem die Elektroden ihre größte Erstreckung vom Boden haben, und/oder in einem Abstand vom Boden, der der Füllhöhe der leitfähigen Flüssigkeit im Kanal entspricht. Der Niederhalter kann ein angetriebenes Band sein, das sich vom Eintrittsende in Richtung zum Austrittsende bewegt.

Bevorzugt ist der Boden des Kanals eben und ist horizontal angeordnet. Optional weisen die Seitenwände des Kanals eine Höhe über dem Boden auf, die gleich dem einfachen Durchmesser oder einem ganzzahligen Vielfachen des Durchmessers der Lebensmittel plus 5 bis 30 mm, z.B. plus 8 bis 15 mm ist.

Weiter bevorzugt ändert sich der Abstand der Seitenwände entlang des Kanals (10), z.B. linear, wobei sich der Abstand der Seitenwände bzw. der Elektroden vom Eintrittsende zum Austrittsende des Kanals bevorzugt vergrößert. In dieser Ausführungsform weitet sich der Kanal mit den in den Seitenwänden angeordneten Elektroden von seinem Eintrittsende zum Austrittsende konisch auf, insbesondere durch einen linear oder bogenförmig vom Eintrittsende zum Austrittsende größer werdenden Abstand der Seitenwände bzw. der Elektroden. Diese Ausführungsform hat den Vorteil, dass der sich beim Erwärmen abnehmende innere elektrische Widerstand der Lebensmittel durch den vom Eintrittsende zum Austrittsende zunehmenden Querschnitt des Kanals zwischen den Elektroden ausgeglichen wird. Dadurch kann die Erwärmung entlang des Kanals gleichmäßiger erfolgen.

Bevorzugt weist die Vorrichtung für die Lebensmittel eine Fördereinrichtung auf, die eingerichtet ist, die Lebensmittel kontinuierlich entlang des Kanals zu fördern. Eine Fördereinrichtung, insbesondere zur Verwendung für aneinanderhängende Lebensmittel, z.B. Ketten von Würsten, kann eine am Austrittsende des Kanals angeordnete Zugeinrichtung sein, z.B. ein drehangetriebenes Rad, um das die aneinanderhängenden Lebensmittel anliegen, oder zwei gegenläufig angetriebene Förderbänder oder Räder, die zwischen sich die aneinanderhängenden Lebensmittel klemmen.

Eine Fördereinrichtung, die insbesondere zum Fördern vereinzelter Lebensmittel geeignet ist, weist ein entlang und unterhalb und/oder oberhalb des Kanals umlaufendes Band auf, von dem sich Schubelemente in den Kanal erstrecken, die eingerichtet sind, sich beim Umlaufen des Bands längs des Kanals vom Eintrittsende in Richtung auf das Austrittsende zu bewegen. Diese Schubelemente schieben die Lebensmittel entlang des Kanals in Richtung auf dessen Austrittsende und können z.B. Stangen, Gitter oder Platten sein, die sich über einen Teil des Querschnitts des Kanals erstrecken.

Alternativ oder zusätzlich kann eine Fördereinrichtung von einer Pumpe oder Flüssigkeitszuführung gebildet werden, die eingerichtet ist, am Eintrittsende Flüssigkeit in den Kanal einzuführen, und die bevorzugt eingerichtet ist, die im Kanal enthaltene Flüssigkeit entlang des Kanals von dessen Eintrittsende zum Austrittsende zu bewegen. Eine solche Pumpe kann z.B. durch eine im Bereich des Austrittsendes angeschlossene Ablassleitung und im Bereich des Eintrittsendes angeschlossene Einlassleitung mit dem Kanal verbunden sein und eingerichtet sein, Flüssigkeit aus der Ablassleitung zu entnehmen und in die Einlassleitung zu drücken.

Generell weist der Kanal bevorzugt einen zu seinem Austrittsende hin ansteigenden Bereich des Bodens auf, um die Lebensmittel am Austrittsende aus dem Kanal zu führen.

Optional weist die Vorrichtung eine Kühleinrichtung auf, die eingerichtet ist, die im Kanal enthaltene Flüssigkeit zu kühlen, insbesondere Flüssigkeit, die aus einer im Bereich des Austrittsendes angeschlossenen Ablassleitung entnommen ist, außerhalb des Kanals zu kühlen und durch eine im Bereich des Kanaleintritts angeschlossene Einlassleitung in den Kanal zu fördern. Optional wird die kühlende Flüssigkeit am Austrittsende und/oder über die Kanaloberseite / Kanaldeckelseite eingelassen und am Kanaleintritt und/oder an der Kanalbodenseite herausgeführt.

Optional ist die erfindungsgemäße Vorrichtung im Anschluss an eine Füllmaschine für Wursthüllen angeordnet und/oder vor einer im Anschluss angeordneten Kühlanlage angeordnet, die eingerichtet ist, erwärmte Lebensmittel durch Berieseln mit Wasser zu kühlen. Dabei ist bevorzugt, dass die Vorrichtung eine Leitung aufweist, die eingerichtet ist, aus der Kühlanlage austretendes Wasser, mit dem die Lebensmittel berieselt wurden, in den Kanal zu leiten, z.B. mittels einer im Bereich des Eintrittsendes angeschlossenen Einlassleitung.

Für einen optimalen Energieeintrag kann die Leitfähigkeit der Flüssigkeit auf die Leitfähigkeit des Lebensmittels eingestellt werden. Generell ist bevorzugt, dass die leitfähige Flüssigkeit eine Leitfähigkeit aufweist, die etwa die Hälfte bis das Doppelte der Leitfähigkeit des Lebensmittels beträgt. Dabei ist die Leitfähigkeit des Lebensmittels dessen Leitfähigkeit über seinen Querschnitt. Bevorzugt ist die leitfähige Flüssigkeit Wasser, dessen Leitfähigkeit optional durch Zusatz von Salz, insbesondere NaCl, eingestellt ist. Optional weist die Vorrichtung einen Leitfähigkeitssensor auf, der zur Messung der elektrischen Leitfähigkeit der Flüssigkeit im Kanal oder in einer der daran angeschlossenen Leitungen eingerichtet ist, und weiter bevorzugt eine abhängig von dem Leitfähigkeitssensor gesteuerte Dosiereinrichtung für ein Salz oder eine Salzlösung und/oder eine abhängig von dem Leitfähigkeitssensor gesteuerte Dosiereinrichtung für Wasser, das entionisiertes Wasser sein kann. Jede der Dosiereinrichtungen ist z.B. vom Leitfähigkeitssensor abhängig gesteuert, Salz oder eine Salzlösung bzw. Wasser in den Kanal oder in eine damit verbundene Leitung zu dosieren, um eine vorbestimmte Leitfähigkeit der im Kanal enthaltenen Flüssigkeit einzustellen.

Vorliegend sind Hüllen generell schlauchförmig und können in Bezug auf Würste auch als Wurstdarm bezeichnet werden.

Im Verfahren werden Lebensmittel dadurch erwärmt, dass sie, bevorzugt mit konstanter Geschwindigkeit, vom Eintrittsende zum Austrittsende eines Kanals bewegt werden, in dem leitfähige Flüssigkeit enthalten ist, während zumindest ein erstes Elektrodenpaar und zumindest ein davon entlang des Kanals beabstandet angeordnetes zweites Elektrodenpaar, deren Elektroden jeweils einander gegenüber in den Seitenwänden angeordnet sind, mit elektrischem Strom beaufschlagt werden.

Optional wird die leitfähige Flüssigkeit aus dem Kanal abgeführt, gekühlt und in den Kanal wieder eingeführt.

Bevorzugt werden die Lebensmittel im Anschluss an das Erwärmen am Austrittende aus dem Kanal bewegt und in einer Kühlanlage mit Kühlwasser berieselt und zumindest ein Teil des Kühlwassers, das aus der Kühlanlage stammt, wird anschließend in den Kanal eingebracht, bevorzugt im Bereich von dessen Eintrittsende.

Die Lebensmittel werden kontinuierlich mittels einer Fördereinrichtung entlang des Kanals bewegt, vereinzelte Lebensmittel bevorzugt mittels einer Fördereinrichtung, die die Flüssigkeit entlang des Kanals bewegt und/oder mittels einer Fördereinrichtung, die Schubelemente entlang des Kanals bewegt. Die Lebensmittel können eine Hülle aufweisen oder eine in der Flüssigkeit ausreichend feste Oberfläche, die aus der Masse des Lebensmittels gebildet ist. Die Lebensmittel können durch den Kanal in einer Anordnung nur hintereinander und/oder in einer Lage bewegt werden, oder in einer Anordnung von zumindest zwei Lagen von Lebensmitteln übereinander. Generell ist bevorzugt, dass die Lebensmittel in jeder Ebene, z.B. in einer einzigen Ebene oder in übereinander angeordneten Ebenen, nur hintereinander und in einer Reihe und nicht nebeneinander angeordnet sind.

Es hat sich gezeigt, dass der Boden und die sich darüber erstreckenden Seitenwände des Kanals bevorzugt jeweils eben sind, der Boden horizontal und die Seitenwände vertikal angeordnet. Denn daraus ergibt sich bei Würsten, die entlang des Kanals bewegt werden, eine schnellere Erwärmung als bei einem konkaven Boden, der z.B. an den Durchmesser der Würste angepasst ist.

Die Erfindung wird nun genauer anhand von Beispielen und mit Bezug auf die Figuren beschrieben, die schematisch in
- Fig. 1 einen Stromquelle einer erfindungsgemäßen Vorrichtung und
- Fig. 2 eine Übersicht über Elemente einer erfindungsgemäßen Vorrichtung zeigen.

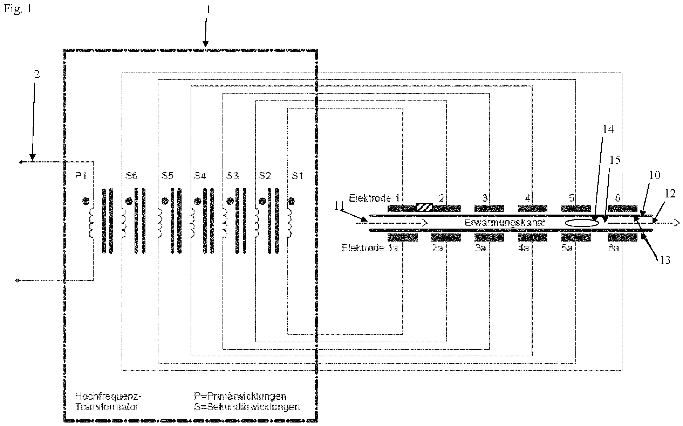

Die Fig. 1 zeigt einen Hochfrequenztransformator 1, der eine vom Generator (an Punkt 2) gespeiste Primärwicklung P1 aufweist, sowie magnetisch gekoppelte, zumindest zwei, Sekundärwicklungen S, hier beispielhaft sechs, S1, S2, S3, S4, S5, S6 enthält. Ein Kanal 10, der sich von seinem Eintrittsende 11 zu seinem Austrittsende 12 erstreckt, weist in den Seitenwänden 13 eingelassene Elektroden 1 bis 6, 1a bis 6a auf, die jeweils Paare einander gegenüberliegender Elektroden 1, 1a und 2, 2a und 3, 3a und 4, 4a und 5, 5a und 6, 6a bilden, von denen jedes Elektrodenpaar mit jeweils einer der Sekundärwicklungen S1 bis S6 elektrisch verbunden ist. Die Elektrodenpaare 1, 1a und 2, 2a und 3, 3a und 4, 4a und 5, 5a und 6, 6a können mit jeweils verschiedenen elektrischen Leistungen beaufschlagt werden, je nach Eigenschaften des Wurstbräts, der Hülle, der leitfähigen Flüssigkeit und der Prozessgeschwindigkeit.

Zwischen den Lebensmitteln 14 und den Elektroden1, 1a und 2, 2a und 3, 3a und 4, 4a und 5, 5a und 6, 6a ist Wasser als leitfähige Flüssigkeit 15 im Kanal 10 enthalten.

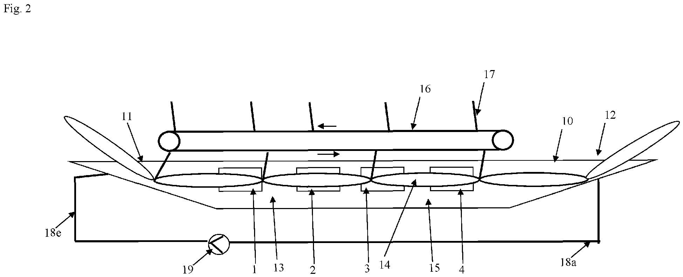

Die Fig. 2 zeigt eine Vorrichtung mit einem Kanal 10 in Seitenansicht und oberhalb des Kanals einer Fördereinrichtung in Form eines umlaufenden Bandes 16, von dem sich Schubelemente 17 in das Volumen des Kanals 10 erstrecken, um darin angeordnete Lebensmittel 14 vom Eintrittsende 11 zum Austrittsende 12 zu bewegen. Ein solches umlaufendes Band 16 kann, optional ohne Schubelemente 17, einen Niederhalter bilden.

Überdies ist als alternative oder zusätzliche Fördereinrichtung ein Zulauf für Wasser als leitfähige Flüssigkeit, der im Bereich des Eintrittsendes angeschlossen ist, gezeigt und als Alternative oder als Zusatz eine Pumpe 19, die im Bereich des Eintrittsendes 11 mit einer Einlassleitung 18e angeschlossen ist, um die leitfähige Flüssigkeit zum Austrittsende zu fördern. Die Pumpe 19 ist mit einer im Bereich des Austrittsendes 12 angeschlossenen Ablassleitung 18a mit dem Kanal 10 verbunden, so dass die Flüssigkeit 15 umlaufend gepumpt werden kann.

## Patentansprüche

1. Vorrichtung zur kontinuierlichen Erwärmung von Lebensmitteln (14) mit einem zur Aufnahme elektrisch leitfähiger Flüssigkeit (15) eingerichteten Kanal (10), an dessen Seitenwänden (13) einander gegenüberliegende Elektroden paarweise angeordnet sind, die mit einer Stromquelle verbunden sind, wobei an den Seitenwänden (13) ein erstes Paar (1, 1a) einander gegenüberliegender Elektroden angeordnet ist und in einem Abstand dazu entlang des Kanals (10) ein zweites Paar einander gegenüberliegender Elektroden (2, 2a) angeordnet ist, die in elektrischem Kontakt zum Inneren des Kanals (10) stehen, **dadurch gekennzeichnet, dass** jedes Paar Elektroden (1, 1a, 2, 2a) mit einer jeweils einer getrennten Sekundärwicklung (S1, S2) eines Transformators (1) der Stromquelle elektrisch verbunden ist und alle Sekundärwicklungen (S1, S2) von zumindest einer Primärwicklung (P1) erregt werden.

2. Vorrichtung nach Anspruch 1, **dadurch gekennzeichnet, dass** die Seitenwände (13) des Kanals (10) vertikal angeordnet sind und der Kanal (10) einen Boden aufweist, der eben und horizontal angeordnet ist und die Seitenwände (13) verbindet.

3. Vorrichtung nach einem der voranstehenden Ansprüche, **dadurch gekennzeichnet, dass** die Seitenwände (13) in einem Abstand gleich dem Durchmesser der Lebensmittel (14), multipliziert mit einem Faktor von 1,05 bis 1,5, angeordnet sind.

4. Vorrichtung nach einem der voranstehenden Ansprüche, **dadurch gekennzeichnet, dass** sich der Abstand der Seitenwände (13) entlang des Kanals (10) verändert, wobei sich der Kanal insbesondere vom Eintrittsende (11) zum Austrittsende (12) konisch aufweitet.

5. Vorrichtung nach einem der voranstehenden Ansprüche, **dadurch gekennzeichnet, dass** die Stromquelle so eingerichtet ist, die Elektrodenpaare (1, 1a, 2, 2a), die voneinander beabstandet entlang der Länge des Kanals von dessen Eintrittsende (11) zum Austrittsende (12) angeordnet sind, mit jeweils unterschiedlicher elektrischer Leistung zu beaufschlagen.

6. Vorrichtung nach einem der voranstehenden Ansprüche, **dadurch gekennzeichnet, dass** oberhalb und oder unterhalb des Kanals (10) eine Fördereinrichtung/en angeordnet ist/sind, die entlang des Kanals (10) umlaufend angetriebene/s Bänd/er (16) aufweist, von dem sich Schubelemente (17) in den Kanal (10) erstrecken, die eingerichtet sind, sich beim Umlaufen des Bands (16) längs des Kanals (10) vom Eintrittsende (11) in Richtung auf das Austrittsende (12) zu bewegen.

7. Vorrichtung nach einem der voranstehenden Ansprüche, **gekennzeichnet durch** eine Fördereinrichtung, die von einer Pumpe (19) gebildet wird, die durch eine im Bereich des Austrittsendes (12) angeschlossene Ablassleitung (18a) und im Bereich des Eintrittsendes (11) angeschlossene Einlassleitung (18e) mit dem Kanal (10) verbunden ist und eingerichtet ist, Flüssigkeit (15) aus der Ablassleitung (18a) zu entnehmen und in die Einlassleitung (18e) zu drücken.

8. Vorrichtung nach einem der voranstehenden Ansprüche, **dadurch gekennzeichnet, dass** als eine Fördereinrichtung am Austrittsende (12) des Kanals (10) eine Zugeinrichtung angeordnet ist, die ein drehangetriebenes Rad aufweist oder zwei gegenläufig angetriebene Förderbänder oder Räder aufweist, die eingerichtet sind, zwischen sich Lebensmittel (14) zu klemmen.

9. Vorrichtung nach einem der voranstehenden Ansprüche, **dadurch gekennzeichnet, dass** sie eine Kühleinrichtung aufweist, die eingerichtet ist, die im Kanal enthaltene Flüssigkeit zu kühlen, insbesondere Flüssigkeit, die aus einer im Bereich des Austrittsendes angeschlossenen Ablassleitung entnommen wird, außerhalb des Kanals zu kühlen und durch eine im Bereich des Eintrittsendes angeschlossene Einlassleitung in den Kanal zu fördern.

10. Vorrichtung nach einem der voranstehenden Ansprüche, **dadurch gekennzeichnet, dass** sie eine Kühleinrichtung aufweist, die eingerichtet ist, die im Kanal enthaltene Flüssigkeit zu kühlen, insbesondere die kühlende Flüssigkeit am Austrittsende und/oder über die Kanaloberseite und/oder Kanaldeckelseite einzulassen und am Kanaleintritt und/oder am Kanalboden zu entnehmen.

11. Vorrichtung nach einem der voranstehenden Ansprüche, **dadurch gekennzeichnet, dass** im Anschluss eine Kühlanlage angeordnet ist, die eingerichtet ist, erwärmte Lebensmittel durch Berieseln mit Wasser zu kühlen, und die Vorrichtung eine Leitung aufweist, die eingerichtet ist, aus der Kühlanlage austretendes Wasser, mit dem die Lebensmittel berieselt wurden, mittels einer im Bereich des Eintrittsendes angeschlossenen Einlassleitung in den Kanal zu leiten.

12. Vorrichtung nach einem der voranstehenden Ansprüche, **gekennzeichnet durch** Leitfähigkeitsmessung/en, die zur Messung der elektrischen Leitfähigkeit der Flüssigkeit im Kanal oder in einer der daran angeschlossenen Leitungen eingerichtet ist, und zumindest eine vom Leitfähigkeitssensor abhängig gesteuerte Dosiereinrichtung für Salz, Salzlösung oder Wasser, die mit dem Kanal verbunden ist.

13. Vorrichtung nach einem der voranstehenden Ansprüche, **dadurch gekennzeichnet, dass** der Transformator zwei oder mehrere Primärwicklungen aufweist, die phasengleich von separaten Takterzeugern angesteuert werden.

14. Verfahren zur Herstellung von Lebensmitteln mit dem Schritt des Erwärmens durch Beaufschlagen mit elektrischem Strom mittels einer Vorrichtung nach einem der voranstehenden Ansprüche bei dem die Lebensmittel mittels einer Fördereinrichtung durch einen mit leitfähiger Flüssigkeit gefüllten Kanal von dessen Eintrittsende zu dessen Austrittsende bewegt werden und mit elektrischem Strom beaufschlagt werden, der durch ein an den Seitenwänden (13) des Kanals (10) angeordnetes erstes Paar einander gegenüberliegender Elektroden und ein in einem Abstand dazu entlang des Kanals (10) angeordnetes zweites Paar einander gegenüberliegender Elektroden in die Flüssigkeit eingeleitet wird.

15. Verfahren nach Anspruch 14, **dadurch gekennzeichnet, dass** die Lebensmittel eine in eine Hülle gefüllte Lebensmittelmasse aufweisen und durch die Hülle aneinanderhängen oder dass die Lebensmittel vereinzelt sind.

## Claims

1. Device for the continuous heating of foodstuffs (14), having a channel (10) which disposed to receive electrically conductive liquid (15) and on the side walls (13) of which opposing electrodes are arranged in pairs and are connected to a current source, a first pair (1, 1a) of opposing electrodes being arranged on the side walls (13) and a second pair of opposing electrodes (2, 2a) being arranged at a distance therefrom along the channel (10) which are in electrical contact with the interior of the channel (10), **characterized in that** each pair of opposing electrodes (1, 1a, 2, 2a) being electrically connected to a respective separate secondary winding (S1, S2) of a transformer (1) of the current source and all secondary windings (S1, S2) being energised by at least one primary winding (P1).

2. Device according to claim 1, **characterised in that** the side walls (13) of the channel (10) are arranged vertically and the channel (10) has a bottom which is flat and arranged horizontally and connects the side walls (13).

3. Device according to one of the preceding claims, **characterised in that** the side walls (13) are arranged at a distance equal to the diameter of the foodstuff (14) multiplied by a factor of 1.05 to 1.5.

4. Device according to one of the preceding claims, **characterised in that** the spacing of the side walls (13) varies along the channel (10), the channel widening in particular conically from the inlet end (11) to the outlet end (12).

5. Device according to one of the preceding claims, **characterised in that** the current source is set up in such a way that the pairs of electrodes (1, 1a, 2, 2a), which are arranged at a distance from one another along the length of the channel from its inlet end (11) to the outlet end (12), are each supplied with different electrical power.

6. Device according to one of the preceding claims, **characterised in that** a conveyor device(s) is/are arranged above and or below the channel (10), which conveyor device(s) has/have belt(s) (16) which is/are driven in rotation along the channel (10) and from which thrust elements (17) extend into the channel (10), which thrust elements are set up to move from the inlet end (11) towards the outlet end (12) as the belt (16) rotates along the channel (10).

7. Device according to one of the preceding claims, **characterised by** a delivery device which is formed by a pump (19) which is connected to the channel (10) by a discharge line (18a) connected in the region of the outlet end (12) and an inlet line (18e) connected in the region of the inlet end (11) and is set up to remove liquid (15) from the discharge line (18a) and to press it into the inlet line (18e).

8. Device according to one of the preceding claims, **characterised in that** a pulling device is arranged as a conveyor device at the outlet end (12) of the channel (10), which has a rotationally driven wheel or has two conveyor belts or wheels driven in opposite directions, which are set up to clamp foodstuffs (14) between them.

9. Device according to one of the preceding claims, **characterised in that** it has a cooling device which is set up to cool the liquid contained in the channel, in particular to cool liquid which is removed from a discharge line connected in the region of the outlet end, outside the channel and to convey it into the channel through an inlet line connected in the region of the inlet end.

10. Device according to one of the preceding claims, **characterised in that** it has a cooling device which is set up to cool the liquid contained in the channel, in particular to admit the cooling liquid at the outlet end and/or via the channel top and/or channel cover side and to remove it at the channel inlet and/or at the channel bottom.

11. Device according to one of the preceding claims, **characterised in that** subsequently a cooling system is arranged, which is set up to cool heated foodstuffs by sprinkling with water, and the device has a line which is set up to guide water emerging from the cooling system, with which the foodstuffs have been sprinkled, into the channel by means of an inlet line connected in the region of the inlet end.

12. Device according to one of the preceding claims, **characterised by** conductivity measurement(s), which is/are set up to measure the electrical conductivity of the liquid in the channel or in one of the lines connected thereto, and at least one dosing device for salt, salt solution or water, which is controlled as a function of the conductivity sensor and is connected to the channel.

13. Device according to one of the preceding claims, **characterised in that** the transformer has two or more primary windings which are driven in phase by separate clock generators.

14. Process for producing foodstuffs comprising the step of heating by applying an electric current by means of a device according to one of the preceding claims, wherein the foodstuffs are moved by means of a conveyor device through a channel filled with conductive liquid from its inlet end to its outlet end and are subjected to an electric current which is introduced into the liquid through a first pair of opposing electrodes arranged on the side walls (13) of the channel (10) and a second pair of opposing electrodes arranged at a distance therefrom along the channel (10).

15. Process according to claim 14, **characterised in that** the foodstuffs have a food mass filled in a casing and are attached to one another by the casing or **in that** the foodstuffs are separated.

## Revendications

1. Dispositif pour le chauffage en continu d'aliments (14) avec un canal (10) aménagé pour recevoir un liquide électriquement conducteur (15), sur les parois latérales (13) duquel sont disposées par paires des électrodes opposées l'une à l'autre, qui sont reliées à une source de courant, une première paire (1, 1a) d'électrodes opposées l'une à l'autre étant disposée sur les parois latérales (13), et une deuxième paire d'électrodes opposées (2, 2a) est disposée à une certaine distance de celle-ci le long du canal (10) qui sont en contact électrique avec l'intérieur du canal (10), charactérisé en ce que chaque paire d'électrodes (1, 1a, 2, 2a) étant reliée électriquement à un enroulement secondaire respectif séparé (S1, S2) d'un transformateur (1) de la source de courant, tous les enroulements secondaires (S1, S2) étant excités par au moins un enroulement primaire (P1).

2. Dispositif selon la revendication 1, **caractérisé en ce que** les parois latérales (13) du canal (10) sont disposées verticalement et le canal (10) comporte un fond qui est plan et disposé horizontalement et qui relie les parois latérales (13).

3. Dispositif selon l'une des revendications précédentes, **caractérisé en ce que** les parois latérales (13) sont disposées à une distance égale au diamètre des aliments (14), multiplié par un facteur compris entre 1,05 et 1,5.

4. Dispositif selon l'une des revendications précédentes, **caractérisé en ce que** l'écartement des parois latérales (13) varie le long du canal (10), le canal s'élargissant notamment en cône de l'extrémité d'entrée (11) à l'extrémité de sortie (12).

5. Dispositif selon l'une des revendications précédentes, **caractérisé en ce que** la source de courant est agencée pour appliquer une puissance électrique différente à chacune des paires d'électrodes (1, 1a, 2, 2a) disposées à distance les unes des autres sur la longueur du canal, de son extrémité d'entrée (11) à son extrémité de sortie (12).

6. Dispositif selon l'une des revendications précédentes, **caractérisé en ce qu'**au-dessus et/ou en dessous du canal (10) est/sont disposé(s) un/des dispositif(s) de transport qui présente(nt) une/des bande(s) (16) entraînée(s) en rotation le long du canal (10), à partir de laquelle/desquelles s'étendent des éléments de poussée (17) dans le canal (10), qui sont adaptés pour se déplacer de l'extrémité d'entrée (11) en direction de l'extrémité de sortie (12) lors de la rotation de la bande (16) le long du canal (10).

7. Dispositif selon l'une des revendications précédentes, **caractérisé par** un dispositif de refoulement qui est formé par une pompe (19) qui est reliée au canal (10) par une conduite d'évacuation (18a) raccordée au niveau de l'extrémité de sortie (12) et une conduite d'entrée (18e) raccordée au niveau de l'extrémité d'entrée (11) et qui est agencée pour prélever du liquide (15) dans la conduite d'évacuation (18a) et le refouler dans la conduite d'entrée (18e).

8. Dispositif selon l'une des revendications précédentes, **caractérisé en ce qu'**un dispositif de traction est disposé en tant que dispositif de transport à l'extrémité de sortie (12) du canal (10), lequel dispositif de traction présente une roue entraînée en rotation ou présente deux bandes transporteuses ou roues entraînées en sens inverse, qui sont adaptées pour serrer entre elles des aliments (14).

9. Dispositif selon l'une des revendications précédentes, **caractérisé en ce qu'**il comprend un dispositif de refroidissement adapté pour refroidir le liquide contenu dans le canal, en particulier pour refroidir le liquide prélevé dans une conduite de vidange raccordée au niveau de l'extrémité de sortie, à l'extérieur du canal, et pour l'acheminer dans le canal par une conduite d'entrée raccordée au niveau de l'extrémité d'entrée.

10. Dispositif selon l'une des revendications précédentes, **caractérisé en ce qu'**il comporte un dispositif de refroidissement qui est agencé pour refroidir le liquide contenu dans le canal, en particulier pour introduire le liquide de refroidissement à l'extrémité de sortie et/ou par le côté supérieur du canal et/ou le côté du couvercle du canal et pour le prélever à l'entrée du canal et/ou au fond du canal.

11. Dispositif selon l'une des revendications précédentes, **caractérisé en ce qu'**une installation de refroidissement est disposée en suivant, qui est agencée pour refroidir des aliments chauffés par arrosage avec de l'eau, et le dispositif présente une conduite qui est agencée pour conduire dans le canal l'eau sortant de l'installation de refroidissement, avec laquelle les aliments ont été arrosés, au moyen d'une conduite d'entrée raccordée dans la zone de l'extrémité d'entrée.

12. Dispositif selon l'une des revendications précédentes, **caractérisé par** un ou des capteurs de conductivité agencés pour mesurer la conductivité électrique du liquide dans le canal ou dans l'une des conduites qui y sont raccordées, et au moins un dispositif de dosage de sel, de solution saline ou d'eau, commandé en fonction du capteur de conductivité et raccordé au canal.

13. Dispositif selon l'une des revendications précédentes, **caractérisé en ce que** le transformateur comprend deux ou plusieurs enroulements primaires qui sont commandés en phase par des générateurs d'horloge séparés.

14. Procédé de fabrication de produits alimentaires comprenant l'étape de chauffage par application d'un courant électrique au moyen d'un dispositif selon l'une des revendications précédentes, dans lequel les produits alimentaires sont déplacés au moyen d'un dispositif de transport à travers un canal rempli d'un liquide conducteur, de son extrémité d'entrée à son extrémité de sortie, et sont soumis à un courant électrique qui est introduit dans le liquide par une première paire d'électrodes opposées disposées sur les parois latérales (13) du canal (10) et par une seconde paire d'électrodes opposées disposées à distance de celles-ci le long du canal (10).

15. Procédé selon la revendication 14, **caractérisé en ce que** les aliments présentent une masse d'aliments remplie dans une enveloppe et sont accrochés les uns aux autres par l'enveloppe ou **en ce que** les aliments sont individualisés.
